# EUROPÄISCHE PATENTSCHRIFT

(11) **EP 0 902 722 B1**
(45) Veröffentlichungstag und Bekanntmachung des Hinweises auf die Patenterteilung: **16.08.2001**
(21) Anmeldenummer: 98904129.8
(22) Anmeldetag: 23.01.1998
(51) Int. Cl.: B01D 61/10, B01D 61/12, C02F 1/44

(54) **EINRICHTUNG ZUR LENKUNG, STEUERUNG, REGELUNG, MESSUNG UND ÜBERWACHUNG VON FLÜSSIGKEITSSTRÖMEN UND WASSERAUFBEREITUNGSANLAGE**
DEVICE FOR CONTROLLING, GUIDING, ADJUSTING, MEASURING AND MONITORING LIQUID FLOWS, AND WATER TREATMENT FACILITY
DISPOSITIF POUR GUIDER, COMMANDER, REGULER, MESURER ET CONTROLER DES FLUX DE LIQUIDES ET INSTALLATION DE TRAITEMENT DES EAUX

(30) Priorität: 07.02.1997 DE 19704656
(43) Veröffentlichungstag der Anmeldung: 24.03.1999
(73) Patentinhaber: Grünbeck Wasseraufbereitung GmbH, D-89420 Höchstädt (DE)
(72) Erfinder: WEINBERGER, Helmut, D-89423 Gundelfingen (DE)
(74) Vertreter: Prüfer, Lutz H., Dipl.-Phys.
(86) Internationale Anmeldenummer: EP9800372
(87) Internationale Veröffentlichungsnummer: WO9834717

(56) Entgegenhaltungen:
- EP-A- 0 272 632
- EP-A- 0 347 297

## Beschreibung

Die Erfindung betrifft eine Einrichtung zur Lenkung, Steuerung, Messung und Überwachung von Flüssigkeitsströmen, insbesondere für eine membrantechnische Wasseraufbereitungsanlage, und eine Wasseraufbereitungsanlage.

In einer membrantechnischen Wasseraufbereitungsanlage, beispielsweise einer nach dem Prinzip der Umkehr-Osmose arbeitenden Wasseraufbereitungsanlage, wird Rohwasser mit Hochdruck über eine synthetische Membran geleitet. Die in dem Wasser vorhandenen Inhaltsstoffe werden von der Membran selektiv zurückgehalten, wodurch eine Auftrennung in reines Wasser (Permeat) und die zurückgehaltenen Inhaltsstoffe enthaltendes Wasser (Konzentrat) erfolgt.

Es sind membrantechnische Wasseraufbereitungsanlagen bekannt, in denen die Flüssigkeitsströme durch Rohre gelenkt werden, wobei die zur Steuerung, Regelung und Überwachung erforderlichen Funktionselemente, wie Regelventile, Steuerventile, Drucksensoren, Druckschalter, Strömungsmesser und ähnliches jeweils in das Rohrsystem über Schraubverbindungen fest eingebaut sind.

Dieser herkömmliche Aufbau weist den Nachteil auf, daß die Montagezeit für den Aufbau unverhältnismäßig groß ist und der Aufbau insgesamt sehr viel Platz einnimmt. Ferner ist das Auswechseln von einzelnen Funktionselementen oder das Einfügen zusätzlicher Funktionselemente kompliziert und unter Umständen nur mit einer Änderung des gesamten Aufbaus zu realisieren.

Aus der EP-A-0 272 632 ist eine Einrichtung zur Steuerung, Regelung, Messung und Überwachung von Flüssigkeitsströmen für eine Wasseraufbereitungsanlage gemäß dem Oberbegriff des Anspruches 1 bekannt.

Aus der EP-A-0 347 297 ist ein Steuerventil für ein Umkehrosmose-Wasserreinigungssystem bekannt.

Aufgabe der Erfindung ist es, eine Einrichtung zur Lenkung, Steuerung und Überwachung von Flüssigkeitsströmen, insbesondere für eine membrantechnische Wasseraufbereitungsanlage, eine Verwendung einer solchen Einrichtung und eine Wasseraufbereitungsanlage bereitzustellen, welche platzsparend und kompakt aufgebaut sind, eine geringe Montage- und Reparaturzeit erfordert und darüber hinaus bei vielseitigen Einsatzmöglichkeiten auch einfach zu bedienen sind.

Die Aufgabe wird gelöst durch die Einrichtung nach Patentanspruch 1, die Verwendung nach Patentanspruch 12 oder durch die Wasseraufbereitungsanlage nach Patentanspruch 13.

Weiterbildungen der Erfindung sind in den Unteransprüchen angegeben.

Weitere Merkmale und Zweckmäßigkeiten ergeben sich aus der Beschreibung von Ausführungsbeispielen der Erfindung in Zusammenhang mit den Figuren. Von den Figuren zeigen:
- Fig. 1: eine perspektivische Darstellung der erfindungsgemäßen Einrichtung mit explosionsmäßig auseinandergezogenen Einzelteilen von der Vorderseite gesehen;
- Fig. 2: eine perspektivische Darstellung der erfindungsgemäßen Einrichtung von der Rückseite gesehen;
- Fig. 3: eine teilweise geschnittene Darstellung eines Ausschnittes der erfindungsgemäßen Vorrichtung und
- Fig. 4: eine schematische Darstellung einer membrantechnischen Wasseraufbereitungsanlage mit einer schematischen Darstellung des Verlaufs der Strömungskanäle.

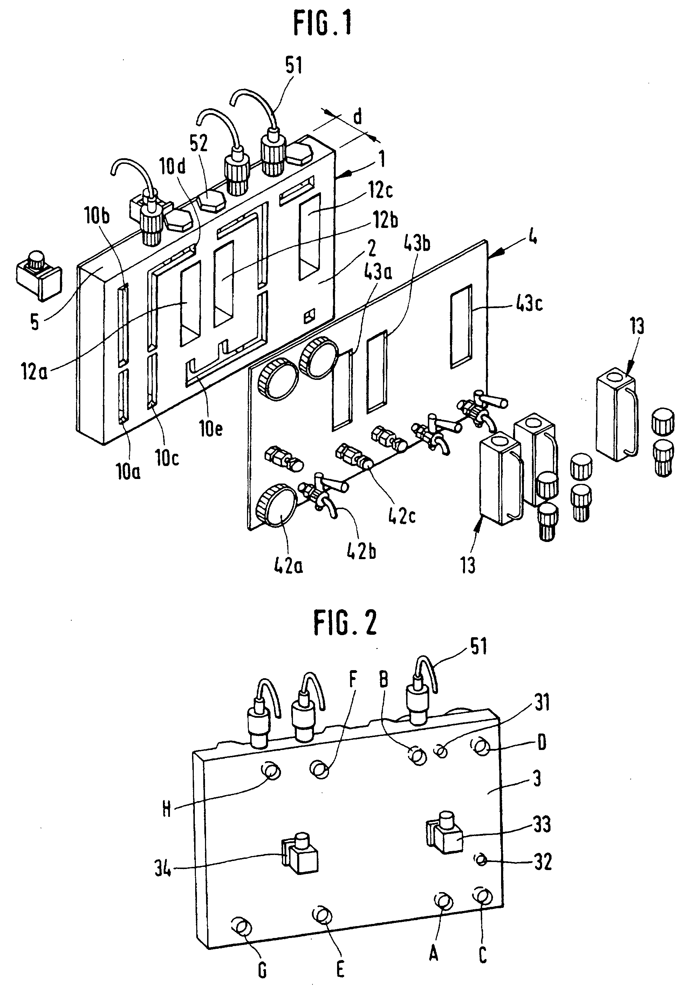

Wie aus den Figuren 1 bis 3 ersichtlich ist, weist die erfindungsgemäße Einrichtung einen plattenförmigen Grundkörper 1 aus Kunststoff oder Metall mit rechteckigem Querschnitt und einer Dicke d auf. An seiner einen Plattenoberfläche, die als Vorderseite 2 definiert wird, weist der Grundkörper 1 eine Mehrzahl von nutförmigen länglichen und jeweils parallel zu einer der Außenkanten des Grundkörpers 1 verlaufende Ausnehmungen bzw. Ausfräsungen 10a, 10b, 10c ... auf, welche einzelne Kanalabschnitte von Strömungskanälen für eine im Grundkörper 1 strömende Flüssigkeit bilden. Die Ausnehmungen 10a, 10b, 10c,... weisen rechteckförmigen oder kreisabschnittförmigen Querschnitt auf. Der Grundkörper ist aus Rotguß oder glasfaserverstärktem Kunststoff, aus Messing (MS), Polypropylen-Random (PP-R) oder VA gebildet. Beim Einsatz von MS bzw. Rotguß und hochkonzentrierten Wässern ist der Grundkörper mediumsgerecht veredelt bzw. beschichtet.

Der Grundkörper 1 weist ferner zusätzlich zu den nutförmigen Ausnehmungen 10a, 10b ..., welche die Strömungskanäle bilden, an seiner Vorderseite 2 eine Anzahl von weiteren Ausnehmungen 12a, 12b, 12c mit rechteckigem Querschnitt auf, deren Kanten parallel zu den Außenkanten des Grundkörpers 1 ausgerichtet sind. Die Ausnehmungen 12a, 12b, 12c dienen zur Aufnahme von passend dimensionierten Schubelementen bzw. Aufnahmekörpern 13 für Instrumente.

Wie aus Fig. 2 ersichtlich ist, weist der Grundkörper an seiner der Vorderseite 2 gegenüberliegenden Rückfläche 3 eine Mehrzahl von Anschlüssen A, B, C, D, E, F, G, H auf, die durch Öffnungen an definierten Positionen in der Rückfläche 3 gebildet sind. Die Anschlüsse dienen als Flüssigkeitszu- bzw. Abführungen.

Ferner sind an der Rückfläche noch Anschlüsse 31, 32, 33, 34 an vorgegebenen Positionen für anzubringende Meß- und Regelgeräte vorgesehen.

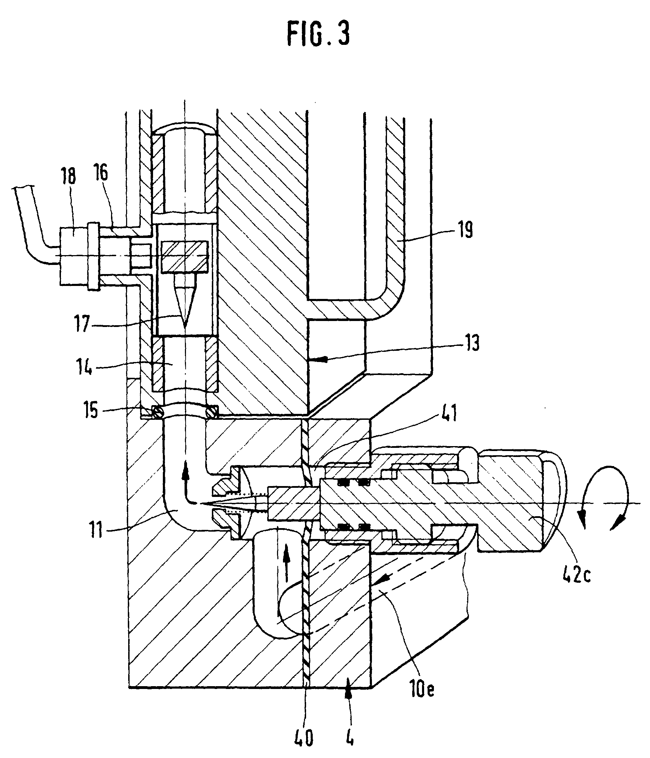

In den Ausnehmungen 12a, 12b, 12c ist jeweils ein Aufnahmekörper 13 mit einem der Ausnehmung entsprechendem Umriß für ein Funktionselement zur Lenkung, Steuerung, Regelung oder Überwachung des Flüssigkeitsstromes eingesetzt. Wie aus Fig. 3 ersichtlich ist, weist der Aufnahmekörper 13 einen in eingesetzter Position vertikal verlaufenden Strömungskanal 14 auf, welcher an seinen Enden mit vorbestimmten Kanalabschnitten an der Oberfläche 2 des Grundkörpers 1 über im Inneren des Grundkörpers vorgesehene Strömungskanäle 11 in Verbindung steht. Beispielsweise dient der in Fig. 3 dargestellte Aufnahmekörper 13 zur Verbindung der in Fig. 1 dargestellten Ausnehmungen bzw. Kanalabschnitte 10e und 10d. Der Strömungskanal 14 des Aufnahmekörpers 13 ist an seiner Verbindungsstelle zum Grundkörper 1 über eine Dichtung in Form eines Gummirings 15 gegen Austreten von Flüssigkeit in die Umgebung abgedichtet. Der Aufnahmekörper 13 weist an seiner in eingesetzter Position der Vorderseite abgewandten Rückfläche einen rohrförmigen Ansatz 16 auf der sich durch eine auf der Rückfläche 3 des Grundkörpers 1 vorgesehene Öffnung hindurcherstreckt und über den die Öffnung in der Rückfläche 3 mit dem Strömungskanal 14 in Verbindung steht. In dem in Fig. 3 gezeigten Ausführungsbeispiel weist der Aufnahmekörper 13 eine Turbine 17 in seinem Strömungskanal 14 auf und an dem rückwärtigen Ansatz ist ein Sensor 18 vorgesehen. Je nach Bedarf können aber auch Aufnahmekörper mit anderen Funktionselementen zur Steuerung, Regelung und Überwachung des Flüssigkeitsstromes vorgesehen sein, beispielsweise mit anderen Typen von Ventilen, Turbinen oder Sensoren. Zweckmäßigerweise weist der Aufnahmekörper an seiner dem Ansatz 16 gegenüberliegenden Seite einen Haltegriff 19 auf mit der er in die Ausnehmung eingeschoben und wieder aus dieser herausgezogen werden kann.

Somit sind die Ausnehmungen 10a, 10b, 10c, ... auf der Vorderseite des Grundkörpers über die Aufnahmekörper 13, die im Inneren des Grundkörpers vorgesehenen Strömungskanäle 11 und die auf der Rückseite vorgesehenen Anschlüsse zu einem definierten Kanalsystem verbunden.

Wie aus Fig. 2 ersichtlich ist, ist über der die Ausnehmungen 10a, 10b, 10c ... aufweisenden Vorderseite 2 des Grundkörpers 1 eine Frontplatte 4 vorgesehen, welche denselben Umriß wie der Grundkörper 1 aufweist und die an dem Grundkörper lösbar aber drehfest gegenüber diesem, beispielsweise durch Schrauben, befestigt ist.

Die Frontplatte 4 überdeckt dabei die Ausnehmungen 10a, 10b, 10c ... wobei zwischen der Frontplatte 4 und dem Rand der Ausnehmungen 10a, 10b, 10c ... jeweils eine Dichtung 40 zum Verhindern eines Flüssigkeitsaustrittes aus den Kanalabschnitten 10a, 10b, 10c, ... vorgesehen ist. Die Dichtung ist beispielsweise in Form von Gummidichtringen ausgebildet.

Die Frontplatte 4 weist ferner eine Mehrzahl von Öffnungen 41 an vorgegebenen Positionen auf, in welchen Funktionselemente 42a, 42b, 42c, ... zur Lenkung, Steuerung, Regelung und Überwachung von durch die Strömungskanäle des Grundkörpers fließenden Wasser, wie beispielsweise Steuerventile, Regelventile, Rückschlagventile, Druckmanometer, Druckschalter, Strömungsmesser und Leitfähigkeitsmesser sowie Probehähne angebracht sind. In Fig. 1 stellt das Funktionselement mit dem Bezugszeichen 42a ein Manometer, das Funktionselement mit dem Bezugszeichen 42b einen Probehahn und das Funktionselement mit dem Bezugszeichen 42c ein Ventil dar.

Ferner weist die Frontplatte 4 eine Mehrzahl von Öffnungen 43a, 43b, 43c in Entsprechung zu den Ausnehmungen 12a, 12b, 12c des Grundkörpers 1 auf, durch die die Aufnahmekörper 13 auch bei befestigter Frontplatte 4 durch Herausziehen und Einschieben ausgewechselt werden können.

Zusätzlich weist der Grundkörper 1 an seiner zwischen der Vorderseite 2 und der Rückseite 3 liegenden Oberseite 5 weitere Öffnungen auf, welche mit dem Kanalsystem im Grundkörper in Verbindung stehen und in die beispielsweise Leitfähigkeitsmeßsonden 51 eingesetzt sind oder die ein Stellglied 52 aufweisen, welches den Aufnahmekörper 13 fixiert.

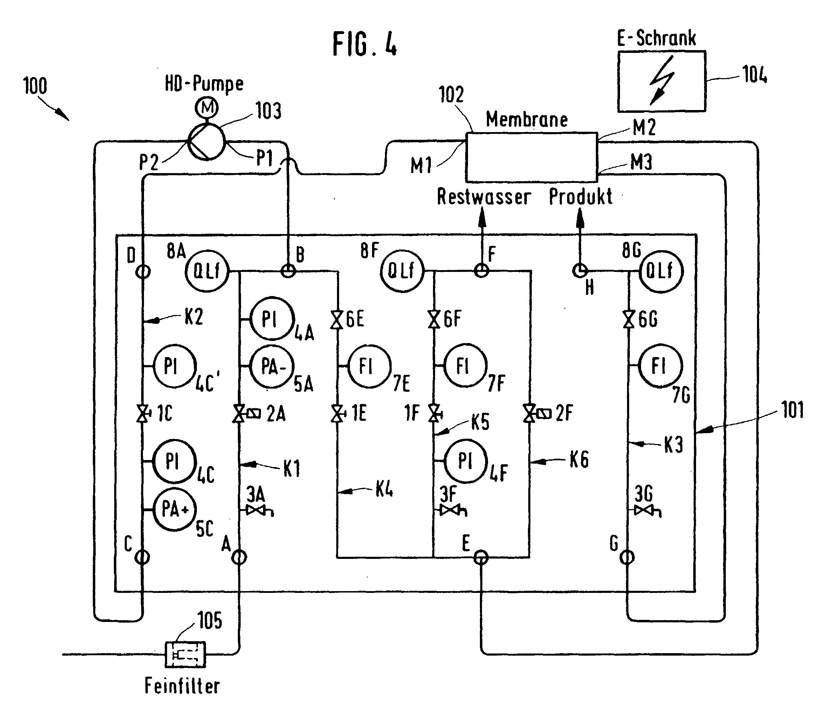

Eine erfindungsgemäße membrantechnische Wasseraufbereitungsanlage 100 ist in Fig. 4 dargestellt. Die Wasseraufbereitungsanlage weist eine Einrichtung 101 zur Lenkung, Steuerung, Regelung und Überwachung der Flüssigkeitsströme auf, die im weiteren als Steuerblock 101 bezeichnet wird. Ferner weist die Wasseraufbereitungsanlage eine Membran 102 mit einem Eingang M1 und zwei Ausgängen M2 und M3 für die Flüssigkeit auf. Zum Erreichen eines für die Überströmung der Membran 102 notwendigen Flüssigkeitsdrucks ist eine Hochdruck-Pumpe 103 mit einem Eingang P1 und einem Ausgang P2 vorgesehen. Erforderlich elektrische Einrichtungen für die Anlage sind in einem separaten E-Schrank 104 vorgesehen. Zum Vorfiltern des eintretenden Rohwassers ist ein Feinfilter 105 vorgesehen.

Der Steuerblock 101 weist vier Eingänge C, A, E und G sowie vier Ausgänge D, B, F, H auf. Der Eingang A steht mit dem Ausgang B über einen in dem Steuerblock 101 vorgesehenen Strömungskanal K1 in Verbindung, wobei der Strömungskanal der Reihe nach zwischen dem Eingang A und dem Ausgang B folgende Instrumente bzw. Elemente aufweist: einen Probehahn 3A, ein Magnetventil 2A, einen Druckschalter 5A, ein Druckmanometer 4A und eine Leitfähigkeitssonde 8A. Der Ausgang B ist mit dem Eingang P1 der Pumpe 103 verbunden und der Ausgang P2 der Pumpe 103 ist mit dem Eingang C verbunden. Ferner ist der Eingang C in dem Steuerblock 101 über einen Strömungskanal K2 mit dem Ausgang D verbunden. In dem Strömungskanal K2 sind aufeinanderfolgend zwischen dem Eingang C und dem Ausgang D folgende Instrumente angeordnet: ein Druckschalter 5C, ein Druckmanometer 4C, ein Einstellventil 1C und ein weiteres Druckmanometer 4C'.

Der Ausgang D ist mit dem Eingang M1 der Membran 102 verbunden. Der das Permeat ableitende Ausgang M3 der Membran 102 ist mit dem Eingang G des Steuerblocks 101 verbunden. Der Eingang G ist über einen in dem Steuerblock 101 vorgesehenen Strömungskanal K3 mit dem Ausgang H verbunden. In dem Kanal K3 sind aufeinanderfolgend zwischen G und H folgende Instrumente angeordnet: ein Probehahn 3G, Ein Strömungsmesser 7G, ein Rückschlagventil 6G und eine Leitfähigkeitssonde 8G. Der Kanal K3 dient zum Überwachen und Ableiten des aus dem Ausgang M3 der Membran austretenden Permeats als gereinigtes Produkt.

Der das Konzentrat ableitenden Ausgang M2 der Membran 102 ist mit dem Eingang E des Steuerblocks verbunden. Der Eingang E des Steuerblocks ist über einen in dem Steuerblock 101 vorgesehenen Strömungskanal K4 mit dem Ausgang B verbunden. Zwischen dem Eingang E und dem Ausgang B sind folgende Instrumente aufeinanderfolgend angeordnet: ein Einstellventil 1E, ein Strömungsmesser 7E und ein Rückschlagventil 6E. Der Kanal K4 dient zum Rückführen eines Teiles des den Ausgang M2 der Membran verlassenden Konzentrats über die Pumpe 103 in die Membran 102.

Ferner ist der Eingang E des Steuerblocks 101 mit dem Ausgang F über einen in dem Steuerblock vorgesehenen Kanal K5 verbunden. Zwischen dem Eingang E und dem Ausgang F sind folgende Instrumente aufeinanderfolgend vorgesehen: ein Probehahn 3F, ein Druckmanometer 4F, ein Einstellventil 1F, ein Strömungsmesser 7F, eine Rückschlagventil 6F und eine Leitfähigkeitssonde 8F. Der Kanal K5 dient zum Ableiten eines Teiles des die Membran am Ausgang M2 verlassenden Konzentrats als Restwasser.

Ferner ist der Eingang E über einen weiteren, in dem Steuerblock 101 gebildeten Kanal K6 mit dem Ausgang F verbunden, wobei in dem Kanal K6 ein Magnetventil 2F vorgesehen ist. Der Kanal K6 wird benötigt, wenn die Membran nach Produktionsende oder nach einer Störung mit Rohwasser freigespült wird.

Der Steuerblock 101 ist wie in dem in den Figuren 1 bis 3 gezeigten Ausführungsbeispiel ausgebildet. Das bedeutet, daß alle Kanäle an der Oberfläche oder innerhalb des Grundkörpers verlaufen. Die Anschlüsse des Steuerblockes sind auf der Rückseite des Grundkörpers vorgesehen, während die Steuer-, Regel- und Überwachungselemente an der Vorderseite vorgesehen sind und somit übersichtlich und leicht zugänglich für eine Bedienungsperson angeordnet sind. Der Betrieb der membrantechnischen Wasseraufbereitungsanlage wird im folgenden anhand von Fig. 4 beschrieben.

Im Betrieb strömt das über den Feinfilter 105 filtrierte Rohwasser über den auf der Rückseite des Steuerblocks 101 vorgesehenen Anschluß A in den Grundkörper des Steuerblocks ein und passiert die in dem Kanal K1 vorgesehenen Instrumente, nämlich den Probehahn 3A, das Magnetventil 2A, das Druckmanometer 4A und den Druckschalter 5A. Das Rohwasser verläßt den Steuerblock bei Ausgang B als Mischwasser in Richtung der Hochdruckpumpe 103, die den notwendigen Betriebsdruck aufbaut.

Dieses Mischwasser tritt bei Anschluß C auf der Rückseite des Steuerblocks wieder in den Grundkörper ein. Überwacht und voreingestellt durch Druckschalter 5C, das Druckmanometer 4C, das Einstellventil 1C, das weitere Druckmanometer 4C' und die Leitfähigkeitssonde 8A gelangt das auf Druck eingestellt Mischwasser über den Ausgang D auf der Rückseite des Steuerblocks in die Membran 102.

Die Membran trennt das Mischwasser in zweierlei Qualitäten und Mengen. Ein Teil strömt als Produkt über den Ausgang M3 der Membran in den auf der Rückseite des Steuerblocks vorgesehenen Anschluß G in den Grundkörper ein, wird über den Probehahn 3G, den Strömungsmesser 7G, das Rückschlagventil 6G und die Leitfähigkeitssonde 8G kontrolliert und verläßt am Ausgang H auf der Rückseite des Steuerblocks den Grundkörper zur weiteren Verwendung.

Der zweite, die Membran am Ausgang M2 als Konzentrat verlassende Teil strömt am Anschluß E in den Grundkörper ein und wird wiederum in zwei unterschiedliche Ströme aufgeteilt.

Der Hauptstrom wird über den Kanal K4, über das Einstellventil 1E, den Strömungsmesser 7E und das Rückstellventil 6E dem Rohwasser zur Sicherung der Abströmmenge auf der Membran 102 zugeführt. Diese Rückführung eines Teiles des Konzentrates ist nötig, um die Abströmgeschwindigkeit auf der Membran konstant zu halten, damit die Membran keine Filterwirkung zeigt. Damit kann die Ausbeute auf etwa 75 % erhöht werden.

Der kleinere Teil des Konzentrates wird durch den Kanal K5 über den Probehahn 3F, das Druckmanometer 4F, das Einstellventil 1F, den Strömungsmesser 7F, das Rückschlagventil 6F und die Leitfähigkeitssonde 8F über den Ausgang F auf der Rückseite des Steuerblocks abgelassen, um das System nicht zu verblocken. Dieses Restwasser wird dem Abwasserkanal zugeführt.

Wenn die membrantechnische Anlage bei Produktionsende oder bei einer Störung angehalten wird, wird die Membran 102 über den Anschluß E, den Ausgang F und den Kanal K6 mit dem Magnetventil 2F mit Rohwasser freigespült.

Wie sich aus der obigen Beschreibung ergibt, liegt ein wesentlicher Vorteil der beschriebenen Anlage in ihrer kompakten Bauweise, die insbesondere auch durch das Vorsehen der Aufnahmekörper für Funktionseinheiten in Form der Schubelemente eine leichte Auswechselbarkeit der Meß-, Regeloder Steuerinstrumente erlaubt. Das Vorsehen der Regel- und Steuerelemente, die von einem Bediener einzustellen sind, auf der Frontseite in übersichtlicher Form erlaubt eine leichte Bedienung durch einen Anwender. Beim Design eines Kanalsystems können schon bestimmte zusätzliche Schleifen vorgesehen sein, die dann über den Einsatz von Ventilen für spezielle Anwendungen in Betrieb genommen werden können oder nicht.

Dadurch ist die oben beschriebene Steuervorrichtung bzw. der Steuerblock auch für andere membrantechnische Wasseraufbereitungsanlagen einsetzbar, beispielsweise für Nanofiltrationsanlagen, Ultrafiltrationsanlagen und Mikrofiltrationsanlagen. Besonders geeignet ist das beschriebene Steuersystem für mittlere Anlagen mit ca. 600 bis 2000 l/h Produktmenge aber auch für Kleinanlagen mit ca. 50 bis 500 l/h Produktmenge.

## Patentansprüche

1. Einrichtung zur Steuerung, Regelung, Messung und Überwachung von Flüssigkeitsströmen für eine Wasseraufbereitungsanlage
mit einem Block (1, 4) mit in dem Block vorgesehenen, Kanalabschnitte für eine strömende Flüssigkeit bildenden Ausnehmungen (10a, 10b, 10c, ...)
und mit einem mit den Kanalabschnitten in Verbindung stehenden Zulauf und Ablauf (A, B, C, D, E, F, G, H) für die Flüssigkeit, wobei wenigstens ein Funktionselement (42a, 42b, 42c, 18, 19) zur Lenkung, Steuerung, Regelung oder Überwachung der in den Kanalabschnitten fließenden Flüssigkeit vorgesehen ist,
dadurch gekennzeichnet, daß
der Block (1, 4) einen ersten plattenförmigen Körper (1) mit einer Oberfläche (2) und
einen mit dem ersten Körper drehfest verbundenen und die Ausnehmungen (10a, 10b, 10c, ...) dicht gegen die Umgebung abschließenden zweiten plattenförmigen Körper (4) aufweist, wobei die Ausnehmungen (10a, 10b, 10c, ...) an der Oberfläche (2) des ersten plattenförmigen Körpers (1) vorgesehen sind.

2. Einrichtung nach Anspruch 1,
dadurch gekennzeichnet, daß der erste Körper zusätzlich Hohlräume in Form von in seinem Inneren verlaufenden Kanälen (11) aufweist.

3. Einrichtung nach Anspruch 2,
dadurch gekennzeichnet, daß der erste Körper (1) an einer der Oberfläche abgewandten Seite Öffnungen (A, B, C, D, E, F, G, H) für den Zulauf und Ablauf aufweist, die mit den Ausnehmungen (10a, 10b, 10c, 10d, ...) in Verbindung stehen.

4. Einrichtung nach Anspruch 3,
dadurch gekennzeichnet, daß die Ausnehmungen (10a, 10b, 10c, ...) an der Oberfläche, die Strömungskanäle 11 im Inneren und die Öffnungen (A, B, C ...) das Kanalsystem für die Flüssigkeit bilden.

5. Einrichtung nach einem der Ansprüche 1 bis 4,
dadurch gekennzeichnet, daß der zweite Körper (4) wenigstens eine Öffnung aufweist, die mit einer der Ausnehmungen (10a, 10b, 10c ...) an der Oberfläche des ersten Körpers in Verbindung steht und in der einerstes Funktionselement (42a,42b,42c) zur Steuerung, Regelung oder Überwachung einer strömenden Flüssigkeit angeordnet ist.

6. Einrichtung nach einem der Ansprüche 1 bis 5,
dadurch gekennzeichnet, daß der erste Körper aus einem Gußteil gefertigt ist.

7. Einrichtung nach einem der Ansprüche 1 bis 6
dadurch gekennzeichnet, daß der erste Körper wenigstens eine weitere Ausnehmung (12a, 12b, 12c) an der Oberfläche aufweist, in der ein ein zweites Funktionselement zur Steuerung, Regelung bzw. Überwachung der strömenden Flüssigkeit beinhaltender Aufnahmekörper (13) einsetzbar ist.

8. Einrichtung nach Anspruch 7,
dadurch gekennzeichnet, der Aufnahmekörper (13) über eine in dem zweiten Körper (4) vorgesehene Öffnung (43a, 43b, 43c) mit einem der Ausnehmung (12a, 12b, 12c) entsprechenden Querschnitt in die Ausnehmung einbringbar und wieder herausnehmbar ist.

9. Einrichtung nach Ansprüch 7 oder 8,
dadurch gekennzeichnet, daß eine Verbindungsstelle zwischen dem Aufnahmekörper und dem ersten Körper (1) zum Verhindern eines Austritts von Flüssigkeit abgedichtet ist.

10. Einrichtung nach einem der Ansprüche 1 bis 9,
dadurch gekennzeichnet, daß der erste Körper (1) in Form einer Platte mit einer definierten Dicke (d) ausgebildet ist und daß der zweite Körper (4) ebenfalls als Platte mit einer Dicke, die geringer ist, als die Dicke des ersten Körpers, ausgebildet ist.

11. Einrichtung nach einem der Ansprüche 5 bis 10,
dadurch gekennzeichnet, daß die Funktionselemente Regelventile, Druckmanometer, Druckschalter, Strömungsmesser, Steuerventile, Rückschlagventile bzw. Leitfähigkeits-Sonden umfassen.

12. Verwendung einer Einrichtung nach einem der Ansprüche 1 bis 10 als Steuerblock in einer membrantechnischen Wasseraufbereitungsanlage.

13. Wasseraufbereitungsanlage mit
einer Membran (102) mit einem Eingang (M1), einem ersten Ausgang (M2) und einem zweiten Ausgang (M3),
einer Pumpe (103) und
mit einer Steuereinrichtung (101) mit
einem ersten (A), einem zweiten (C), einem dritten (G) und
einem vierten (E) Eingang und mit
einem ersten (B), einem zweiten (D), einem dritten (H) und
einem vierten (F) Ausgang,
wobei der erste Eingang (A) über einen ersten Kanal (K1) mit dem ersten Ausgang (B),
der zweite Eingang (C) über einen zweiten Kanal (K2) mit dem zweiten Ausgang (D),
der dritte Eingang (G) über einen dritten Kanal (K3) mit dem dritten Ausgang (H) und
der vierte Eingang (E) über einen vierten Kanal (K4) mit dem ersten Ausgang (B),
sowie über einen fünften Kanal (K5) mit dem vierten Ausgang (F) verbunden ist und wobei
der erste Ausgang (D) über die Pumpe (103) mit dem zweiten Eingang (C) verbunden ist, der zweite Ausgang (D) mit dem Eingang (M1) der Membran (102), und der erste Ausgang (M2) der Membran mit dem vierten Eingang (E) verbunden ist und
der zweite Ausgang (M3) der Membran mit dem dritten Eingang (G) verbunden ist,
wobei die Steuereinrichtung (101) als Block ausgebildet ist und wenigstens ein Funktionselement (42a,42b,42c,18,19) zur Lenkung, Steuerung, Regelung oder überwachung der in den Kanäle fließenden Flüssigkeit vorgesehen ist, wobei der Block einen die Kanäle aufweisenden Grundkörper und eine die Kanäle abdeckende Platte aufweist.

## Claims

1. Device for controlling, regulating, measuring and monitoring liquid flows *for* a water treatment plant, having a unit (1, 4) with, provided in the unit, cutouts (10a, 10b, 10c, ...) forming channel sections for a flowing liquid and having an inflow and outflow (A, B, C, D, E, F, G, H), connected to the channel sections, for the liquid, at least one functional element (42a, 42b, 42c, 18, 19) being provided to steer, control, regulate or monitor the liquid flowing in the channel sections, characterized in that the unit (1, 4) comprises a first plate-shaped body (1) having a surface (2) and a second plate-shaped body (4) connected to the first body in a manner fixed in rotation and sealingly shutting off the cutouts (10a, 10b, 10c, ...) from the environment, the cutouts (10a, 10b, 10c, ...) being provided on the surface (2) of the first plate-shaped body (1).

2. Device according to Claim 1, characterized in that the first body additionally comprises cavities in the form of channels (11) extending in its interior.

3. Device according to Claim 2, characterized in that the first body (1) comprises, on a side facing away from the surface, apertures (A, B, C, D, E, F, G, H) for the inflow and outflow which are in connection with the cutouts (10a, 10b, 10c, 10d, ...).

4. Device according to Claim 3, characterized in that the cutouts (10a, 10b, 10c, ...) on the surface, the flow channels (11) in the interior and the apertures (A, B, C ...) form the channel system for the liquid.

5. Device according to one of Claims 1 to 4, characterized in that the second body (4) comprises at least one aperture which is in connection with one of the cutouts (10a, 10b, 10c ...) on the surface of the first body and in which a first functional element (42a, 42b, 42c) for controlling, regulating or monitoring a flowing liquid is provided.

6. Device according to one of Claims 1 to 5, characterized in that the first body is produced from a casting.

7. Device according to one of Claims 1 to 6, characterized in that the first body comprises at least one further cutout (12a, 12b, 12c) on the surface in which a receiving body (13) containing a second functional element for controlling, regulating and/or monitoring the flowing liquid can be inserted.

8. Device according to Claim 7, characterized in that the receiving body (13) can be inserted into the cutout and removed again therefrom via an aperture (43a, 43b, 43c) provided in the second body (4) and having a cross section corresponding to the cutout (12a, 12b, 12c).

9. Device according to Claim 7 or 8, characterized in that a connection point between the receiving body and the first body (1) is sealed to prevent an escape of liquid.

10. Device according to one of Claims 1 to 9, characterized in that the first body (1) is designed in the form of a plate having a defined thickness (d) and in that the second body (4) is likewise designed as a plate having a thickness which is less than the thickness of the first body.

11. Device according to one of Claims 5 to 10, characterized in that the functional elements comprise control valves, pressure manometers, pressure switches, flow meters, control valves, nonreturn valves and/or conductivity probes.

12. Use of a device according to one of Claims 1 to 10 as a control unit in a water treatment plant using membrane technology.

13. Water treatment plant having a membrane (102) with an inlet (M1), a first outlet (M2) and a second outlet (M3), a pump (103) and a control device (101) with a first (A), a second (C), a third (G) and a fourth (E) inlet and with a first (B), a second (D), a third (H) and a fourth (F) outlet, the first inlet (A) being connected via a first channel (K1) to the first outlet (B), the second inlet (C) via a second channel (K2) to the second outlet (D), the third inlet (G) via a third channel (K3) to the third outlet (H) and the fourth inlet (E) via a fourth channel (K4) to the first outlet (B), and via a fifth channel (K5) to the fourth outlet (F), and the first outlet (D) being connected via the pump (103) to the second inlet (C), the second outlet (D) to the inlet (M1) of the membrane (102), and the first outlet (M2) of the membrane to the fourth inlet (E) and the second outlet (M3) of the membrane to the third inlet (G), the control device (101) being designed as a unit and at least one functional element (42a, 42b, 42c, 18, 19) being provided to steer, control, regulate or monitor the liquid flowing in the channels, the unit having a base body comprising the channels and a plate masking the channels.

## Revendications

1. Dispositif pour guider, réguler, mesurer et contrôler des flux de liquides pour une installation de traitement des eaux
comportant un bloc (1, 4) dans lequel sont prévues des sections de canaux pour un flux de liquide formant des évidements (10a, 10b, 10c,...)
et comportant une entrée et une sortie (A, B, C, D, E, F, G, H) pour le liquide, communiquant avec les sections de canaux, de façon qu'au moins un élément fonctionnel (42a, 42b, 42c, 18, 19) puisse être prévu pour guider, commander, réguler ou contrôler le liquide circulant dans les sections de canaux,
caractérisé en ce que le bloc (1, 4) comporte un premier corps en forme de plaque (1) ayant une surface (2) et
un second corps en forme de plaque (4) relié en rotation au premier corps et obturant les évidements (10a, 10b, 10c,...) de façon étanche par rapport au milieu ambiant (4), de façon que les évidements (10a, 10b, 10c,...) soient prévus à la surface (2) du premier corps en forme de plaque (1).

2. Dispositif selon la revendication 1, caractérisé en ce que le premier corps présente en outre des espaces creux sous la forme de canaux (11) s'étendant à l'intérieur.

3. Dispositif selon la revendication 2, caractérisé en ce que le premier corps (1) présente, sur une face opposée à sa surface, des orifices (A, B, C, D, E, F, G, H) pour l'entrée et la sortie, lesquels communiquent avec les évidements (10a, 10b, 10c, 10d,...).

4. Dispositif selon la revendication 3, caractérisé en ce que les évidements (10a, 10b, 10c, ...) à la surface, les canaux d'écoulement (11) à l'intérieur et les orifices (A, B, C, ...) constituent le système de canaux pour le liquide.

5. Dispositif selon l'une quelconque des revendications 1 à 4, caractérisé en ce que le second corps (4) présente au moins un orifice communiquant avec l'un des évidements (10a, 10b, 10c, ...) à la surface du premier corps et dans lequel est disposé un premier élément fonctionnel (42a, 42b, 42c) pour commander, réguler ou contrôler un flux de liquide.

6. Dispositif selon l'une quelconque des revendications 1 à 5, caractérisé en ce que le premier corps est réalisé en une pièce moulée.

7. Dispositif selon l'une quelconque des revendications 1 à 6, caractérisé en ce que le premier corps présente sur sa surface au moins un autre évidement (12a, 12b, 12c) dans lequel peut être inséré un corps récepteur (13) contenant un second élément fonctionnel pour commander, réguler ou contrôler le flux de liquide.

8. Dispositif selon la revendication 7, caractérisé en ce que le corps récepteur (13) peut être introduit ou retiré dans l'évidement, à travers un orifice (43a, 43b, 43c) pratiqué dans le second corps (4) et ayant une section correspondant à celle de l'évidement (12a, 12b, 12c).

9. Dispositif selon l'une des revendications 7 ou 8, caractérisé en ce que la zone de liaison entre le corps récepteur et le premier corps (1) est rendue étanche, afin d'empêcher toute fuite de liquide.

10. Dispositif selon l'une quelconque des revendications 1 à 9, caractérisé en ce que le premier corps (1) présente la forme d'une plaque ayant une épaisseur définie (d) et que le second corps (4) présente également la forme d'une plaque dont l'épaisseur est inférieure à l'épaisseur du premier corps.

11. Dispositif selon l'une quelconque des revendications 5 à 10, caractérisé en ce que les éléments fonctionnels comportent des vannes de réglage, des manomètres, des interrupteurs à poussoir, des débitmètres, des vannes de commande, des clapets de retenue et des sondes de conductibilité.

12. Utilisation d'un dispositif selon l'une quelconque des revendications 1 à 10 en tant que bloc de commande dans une installation de traitement des eaux par procédé à membrane.

13. Installation de traitement des eaux comportant
une membrane (102) ayant une entrée (M1), une première sortie (M2) et une seconde sortie (M3),
une pompe (103) et
un dispositif de commande (101) qui comporte
une première entrée (A) une seconde entrée (C), une troisième entrée (G) et une quatrième entrée (E) et
une première sortie (B), une seconde sortie (D), une troisième sortie (H) et une quatrième sortie (F),
la première entrée (A) communiquant par un premier canal (K1) avec la première sortie (B),
la seconde entrée (C) communiquant par un second canal (K2) avec la seconde sortie (D),
la troisième entrée (G) communiquant par un troisième canal (K3) avec la troisième sortie(H) et
la quatrième entrée (E) communiquant par un quatrième canal (K4) avec la première sortie (B),
ainsi que par un cinquième canal (K5) avec la quatrième sortie (F),
la première sortie (D) communiquant via la pompe (103) avec la seconde entrée (C), la seconde sortie (D) communiquant avec l'entrée (M1) la membrane (102), et la première sortie (M2) de la membrane communiquant avec la quatrième entrée (E) et la seconde sortie (M3) de la membrane communiquant avec la troisième entrée (G),
le dispositif de commande (101) étant constitué sous forme de bloc et en ce bloc qu'il est prévu au moins un élément fonctionnel (42a, 42b, 42c, 18, 19) pour guider, commander, réguler ou contrôler le flux de liquide circulant dans les canaux, ledit bloc étant constitué d'un corps de base comportant les canaux et d'une plaque recouvrant lesdits canaux.
